(19) **Europäisches Patentamt European Patent Office Office européen des brevets**

(11) **EP 4 672 229 A1**

(12) **EUROPEAN PATENT APPLICATION**

(43) Date of publication:
**31.12.2025 Bulletin 2026/01**

(21) Application number: **24185027.0**

(22) Date of filing: **27.06.2024**

(51) International Patent Classification (IPC):
**G10L 19/00** *(2013.01)* **G10L 25/30** *(2013.01)*
**G06N 3/02** *(2006.01)*

(52) Cooperative Patent Classification (CPC):
**G10L 19/00; G06N 3/045; G10L 25/30;** G06N 3/02

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Koninklijke Philips N.V.**
**5656 AG Eindhoven (NL)**

(72) Inventors:
• **SCHUIJERS, Erik Gosuinus Petrus**
  **Eindhoven (NL)**
• **KECHICHIAN, Patrick**
  **Eindhoven (NL)**
• **RAVI, Akshaya**
  **Eindhoven (NL)**

(74) Representative: **Philips Intellectual Property & Standards**
**High Tech Campus 52**
**5656 AG Eindhoven (NL)**

(54) **GENERATION AND PROCESSING OF ENCODED AUDIO DATA SIGNAL**

(57) An encoder audio apparatus comprises a signal splitter circuit (203) dividing the audio signal into at least a first and second signal component. A first neural network (207) generates a first latent space feature set representing a waveform of the first signal component a second neural network (209) generates a second latent space feature set representing a spectro-temporal shape of the second signal component. An encoded audio data stream comprising the latent space feature sets is transmitted to a decoder audio apparatus which comprises a noise generator (305) and a neural network arrangement (303) which generates an output audio signal. The neural network arrangement (303) has input nodes for receiving the noise signal and receives the latent space features as input features. Typically, the arrangement includes one neural network generating a signal reproducing the waveform of the first signal component and a second neural network generating a signal reproducing the spectro-temporal shape of the second signal component.

**FIG. 2**

Processed by Luminess, 75001 PARIS (FR)

EP 4 672 229 A1

**Description**

FIELD OF THE INVENTION

The invention relates to generation and processing of an encoded audio data signal, and in particular, but not exclusively, to an encoded audio data signal representing an audio signal using latent space features sets for artificial neural networks.

BACKGROUND OF THE INVENTION

Audio applications have become numerous and widespread and increasingly form part of many audiovisual experiences. Indeed, new and improved audio experiences and applications are continuously being developed resulting in increased demands on the audio processing and rendering. A lot of research and development effort has focused on providing efficient and high-quality audio encoding and audio decoding.

Recently it has been proposed to utilize artificial neural networks as part of audio encoding and/or audio decoding. However, how exactly to include such artificial neural networks and for which specific functions and in which context is a challenging issue with high impact on the performance and implementation properties, such as specifically requirements for computational resources.

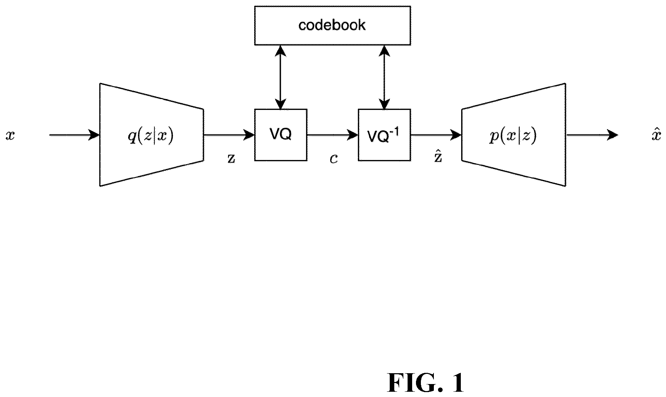

A number of different approaches have been proposed which provide different advantages and disadvantages. A particular approach that has been proposed in Aaron van den Oord and Oriol Vinyals and Koray Kavukcuoglu, "Neural Discrete Representation Learning", 2018, arXiv 1711.00937 and is known as Vector Quantized Variational Auto-Encoders (VQVAE). The VQVAE scheme is illustrated in FIG. 1. In the approach, the encoder learns the probability distribution $q(z|x)$ by means of an artificial neural network. The resulting parameters $z$ are quantized to an index value $c$ which maps to a code $e$ using a vector quantizer VQ of which the codebook is trained during learning. After dequantizing the vector to the approximated parameters $\hat{z}$, the decoder learns the probability distribution $p(x|z)$ resulting in the reconstructed signal $\hat{x}$.

The approach has been found to be particularly advantageous in many applications and for many signals. However, it has been found to not be ideal in all embodiments and for all scenarios. For example, it has been found to result in some audio quality degradation and a suboptimal signal being reconstructed at the decoder even when well-trained networks are employed. It also tends to result in high computational resource requirements and complex implementations.

Hence, an improved approach would be advantageous. In particular, an approach allowing increased flexibility, an improved performance, increased audio quality, improved audio quality to data rate trade-off, reduced complexity and/or resource usage, improved audio signal encoding/decoding, reduced computational load, facilitated implementation, improved dynamic audio processing and reproduction, and/or an improved audio experience would be advantageous.

SUMMARY OF THE INVENTION

Accordingly, the invention seeks to preferably mitigate, alleviate or eliminate one or more of the above mentioned disadvantages singly or in any combination.

According to an aspect of the invention, there is provided an audio apparatus comprising: a receiver arranged to receive an audio signal; a signal splitter circuit arranged to divide the audio signal into at least a first signal component and a second signal component; a first trained artificial neural network arranged to receive the first signal component and to generate a first latent space feature set representing a waveform of the first signal component; a second trained artificial neural network arranged to receive the second signal component and to generate a second latent space feature set representing a spectro-temporal shape of the second signal component; and an output generator arranged to generate an encoded audio data signal representing the audio signal to comprise the first latent space feature set and the second latent space feature set.

The approach may provide an improved audio experience in many embodiments. For many signals and scenarios, the approach may provide improved encoding of an audio signal allowing improved audio reproduction and generation by a decoder audio apparatus based on the latent space feature sets. An encoded audio signal with a substantially reduced data rate can often be achieved for many audio signals.

The approach may provide a particularly advantageous arrangement which may in many embodiments and scenarios allow a facilitated and/or improved possibility of utilizing artificial neural networks in audio processing, including audio encoding and decoding. The approach may allow an advantageous employment of artificial neural network(s) in generating an encoded audio data signal representing an audio output signal. The encoded audio data signal may be particularly suitable for reproduction of the audio output signal using artificial neural networks.

The approach may provide an efficient implementation and may in many embodiments allow a reduced complexity and/or resource usage.

The artificial neural network(s) may be trained artificial neural network(s) trained by training data including training audio signals and a cost function which may be different for the first and the second trained artificial neural network.

The audio apparatus may specifically be an encoder audio apparatus.

The receiver may receive the audio signal from any suitable internal or external source. For example, the audio apparatus may include a bitstream receiver for receiving a bitstream comprising the audio signal.

The first trained artificial neural network may be trained to generate the first latent space feature set to reduce a loss function comprising a contribution for a difference between a waveform of the first signal component and a waveform of a signal generated from the first latent space feature set.

The second trained artificial neural network may be trained to generate the second latent space feature set to represent/allow reconstruction of statistical spectro-temporal shape (envelope) properties of the second signal component.

The first trained artificial neural network may be trained to generate the first latent space feature set to represent a waveform of the first signal component. The second trained artificial neural network may be trained to generate the second latent space feature set to represent a spectro-temporal shape (property), such as a Mel spectrogram, of the second signal component.

A spectro-temporal shape may be a spectro-temporal envelope, and may specifically be a spectral envelope and a temporal envelope. The first and second latent space feature sets may also be referred to as a first and second latent space feature vector respectively.

A latent space may for example be a lower-dimensional space that captures (e.g. important) underlying features or representation of the input data. It may be created by the hidden layers of a neural network and may contain learned representations of the input data that are useful for making predictions or performing tasks. A latent space can often be thought of as an abstract, compressed representation of the input data.

A latent space feature set may be a collection of learned features or representations that are extracted from the input data and encoded within the latent space of a deep learning model.

According to an optional feature of the invention, the first trained artificial neural network is trained to generate the first latent space feature set to provide waveform error minimization when replicating the first signal component from the first latent space feature set, and the second trained artificial neural network is trained to generate the second latent space feature set to provide spectro-temporal shape error minimization when replicating the second signal component from the second latent space feature set.

This may provide a particularly efficient and high performance operation in many scenarios, and may typically result in an improved encoded audio data signal allowing improved audio quality of an audio signal generated from the encoded audio data signal. An improved data rate to audio quality for the encoded audio data signal may be achieved for many signals.

The first trained artificial neural network may be trained to generate the first latent space feature set to provide waveform error minimization for a trained artificial neural network replicating the first signal component from the first latent space feature set, and the second trained artificial neural network may be trained to generate the second latent space feature set to provide spectro-temporal shape error minimization for a trained artificial neural network replicating the second signal component from the second latent space feature set.

According to an optional feature of the invention, the first artificial neural network is trained by a loss function including a contribution dependent on a difference between a waveform of one of the audio signal and the first signal component and a waveform of a signal generated from the first latent space feature set.

This may provide a particularly efficient and high performance operation in many scenarios, and may typically result in an improved encoded audio data signal allowing improved audio quality of an audio signal generated from the encoded audio data signal. An improved data rate to audio quality for the encoded audio data signal may be achieved for many signals.

The signal generated from the first latent space feature set may be a replica of the first signal component or may e.g. be the audio signal as appropriate. The signal generated from the first latent space feature set may be generated by a trained artificial neural network having the first latent space feature set as input features.

According to an optional feature of the invention, the second artificial neural network is trained by a loss function including a contribution dependent on a difference between a spectro-temporal shape of one of the audio signal and the second signal component and a waveform of a signal generated from the second latent space feature set.

This may provide a particularly efficient and high performance operation in many scenarios, and may typically result in an improved encoded audio data signal allowing improved audio quality of an audio signal generated from the encoded audio data signal. An improved data rate to audio quality for the encoded audio data signal may be achieved for many signals.

The signal generated from the second latent space feature set may be a replica of the second signal component or may be the audio signal as appropriate. The signal generated from the second latent space feature set may be generated by a trained artificial neural network having the second latent space feature set as input features (as well as an input noise signal).

According to an optional feature of the invention, the output generator is arranged to represent at least one of the first latent space feature set and the second latent space feature second set by a data value of the encoded audio data signal, the data value being a reference to an entry of a codebook comprising a plurality of entries providing different values for a latent space feature set, and wherein at least some entries of the codebook are determined by a trained network jointly trained with at least one of the first trained artificial neural network and the second trained artificial neural network.

This may provide a particularly advantageous operation, performance and/or implementation.

According to another aspect of the invention, there is provided an audio apparatus comprising: a receiver arranged to receive an encoded audio data signal representing an audio signal, the encoded audio data signal comprising: a first latent space feature set representing a waveform of a first signal component of the audio signal, and a second latent space feature set representing a spectro-temporal shape of a second signal component of the audio signal; a noise generator arranged to generate a noise signal; a trained artificial neural network arrangement arranged to generate an output audio signal, the trained artificial neural network arrangement having input nodes for receiving the noise signal and being arranged to receive the first latent space feature set and the second latent space feature as input features.

The trained artificial neural network may consist of/comprise one or more artificial neural networks.

The approach may provide an improved audio experience in many embodiments. For many signals and scenarios, the approach may provide improved synthesizing of an audio signal from an encoded audio data signal allowing improved audio reproduction and quality. An encoded audio signal with a substantially reduced data rate can be sufficient to generate a high quality audio signal.

The approach may provide a particularly advantageous arrangement which may in many embodiments and scenarios allow a facilitated and/or improved possibility of utilizing artificial neural networks in audio processing, including audio decoding. The approach may allow an advantageous employment of artificial neural network(s) in generating an audio data signal from an encoded audio data signal.

The approach may provide an efficient implementation and may in many embodiments allow a reduced complexity and/or resource usage.

The audio apparatus may specifically be a decoder audio apparatus.

The receiver may receive the encoded audio data signal from any suitable internal or external source. For example, the audio apparatus may include a bitstream receiver for receiving a bitstream comprising the encoded audio data signal. In many embodiments, the received encoded audio data signal may be one generated by an audio apparatus as described/mentioned above.

The trained artificial neural network arrangement may consist of/comprise one or more artificial neural networks.

According to an optional feature of the invention, the trained artificial neural network arrangement comprises a single trained artificial neural network receiving the noise signal, the first latent space feature set, and the second latent space feature second set and having output values providing samples of the audio signal.

This may provide a particularly efficient and high performance operation in many scenarios, and may typically result in an improved audio signal being generated from the encoded audio data signal. It may in many embodiments allow a facilitated and/or improved implementation. In many cases, it may reduce the required complexity and/or resource requirements.

According to an optional feature of the invention, the trained artificial neural network arrangement comprises: a first trained artificial neural network arranged to receive the first latent space feature set as input features and to generate a first signal component; a second trained artificial neural network having input nodes for receiving the noise signal and being arranged to receive the second latent space feature set as input features and to generate a second signal component; and a combiner arranged to generate the audio signal as a combination of the first signal component and the second signal component.

This may provide a particularly efficient and high performance operation in many scenarios, and may typically result in an improved audio signal being generated from the encoded audio data signal. It may in many embodiments allow a facilitated and/or improved implementation. In many cases, it may reduce the required complexity and/or resource requirements.

In some embodiments, the first trained artificial neural network is trained to generate the first signal component from the first latent space feature set to provide waveform error minimization relative to a signal component from which the first latent space feature set is generated.

In some embodiments, the second trained artificial neural network is trained to generate the second signal component from the second latent space feature set to provide spectro-temporal shape error minimization relative to a signal component from which the second latent space feature set is generated.

According to an optional feature of the invention, the first trained artificial neural network is trained to generate the first signal component to match a waveform of a first signal portion of the audio signal and the second trained artificial neural network is trained to generate the second signal component to match a spectro-temporal shape of a second signal portion of the audio signal, the second signal portion being a residual portion of the audio signal resulting from a removal of the first signal portion from the audio signal.

This may provide a particularly efficient and high performance operation in many scenarios, and may typically result in an improved encoded audio data signal allowing improved audio quality of an audio signal generated from the encoded audio data signal. An improved data rate to audio quality for the encoded audio data signal may be achieved for many signals.

According to an optional feature of the invention, the first signal component is deterministically dependent on the first latent space feature set and the second signal component is not deterministically dependent on the second latent space feature second set.

This may provide a particularly advantageous operation, performance and/or implementation.

In some embodiments, the first trained artificial neural network is arranged to generate the first signal component to be deterministically dependent on (only) the first latent space feature set and the second trained artificial neural network is arranged to generate the second signal component to not deterministically dependent on (only) the second latent space feature second set.

According to an optional feature of the invention, the second trained artificial neural network is arranged to further receive the first latent space feature set as input features.

This may provide a particularly advantageous operation, performance and/or implementation.

According to another aspect of the invention, there is provided a method of generating an encoded audio data signal, the method comprising: receiving an audio signal; dividing the audio signal into at least a first signal component and a second signal component; a first encoding trained artificial neural network receiving the first signal component and generating a first latent space feature set representing a waveform of the first signal component; a second encoding trained artificial neural network receiving the second signal component and generating a second latent space feature set representing a spectro-temporal shape of the second signal component; and generating an encoded audio data signal representing the audio signal to comprise the first latent space feature set and the second latent space feature set.

According to another aspect of the invention, there is provided a method of generating an output audio signal, the method comprising: receiving an encoded audio data signal representing an audio signal, the encoded audio data signal comprising: a first latent space feature set representing a waveform of a first signal component of the audio signal, and a second latent space feature set representing a spectro-temporal shape of a second signal component of the audio signal; generating a noise signal; a trained artificial neural network arrangement generating an output audio signal, the trained artificial neural network arrangement having input nodes receiving the noise signal, the first latent space feature set, and the second latent space feature as input features.

These and other aspects, features and advantages of the invention will be apparent from and elucidated with reference to the embodiment(s) described hereinafter.

BRIEF DESCRIPTION OF THE DRAWINGS

Embodiments of the invention will be described, by way of example only, with reference to the drawings, in which

FIG. 1 illustrates some elements of an example of an audio encoder decoder system;
FIG. 2 illustrates some elements of an example of an encoder audio apparatus in accordance with some embodiments of the invention;
FIG. 3 illustrates some elements of an example of a decoder audio apparatus in accordance with some embodiments of the invention;
FIG. 4 illustrates some elements of an example of a decoder audio apparatus in accordance with some embodiments of the invention;
FIG. 5 illustrates some elements of an example of a decoder audio apparatus in accordance with some embodiments of the invention;
FIG. 6 illustrates an example of elements of an arrangement for training an artificial neural network;
FIG. 7 illustrates some elements of an example of an encoder and decoder audio system in accordance with some embodiments of the invention;
FIG. 8 illustrates an example of a structure of an artificial neural network;
FIG. 9 illustrates an example of a neuron for an artificial neural network;
FIG. 10 illustrates an example of a neural network structure suitable for implementing an example of an audio apparatus in accordance with some embodiments of the invention;
FIG. 11 illustrates an example of a neural network structure suitable for implementing an example of an audio apparatus in accordance with some embodiments of the invention;
FIG. 12 illustrates an example of a neural network structure suitable for implementing an example of an audio apparatus in accordance with some embodiments of the invention;
FIG. 13 illustrates some elements of a possible arrangement of a processor for implementing elements of an audio apparatus in accordance with some embodiments of the invention.

DETAILED DESCRIPTION OF SOME EMBODIMENTS OF THE INVENTION

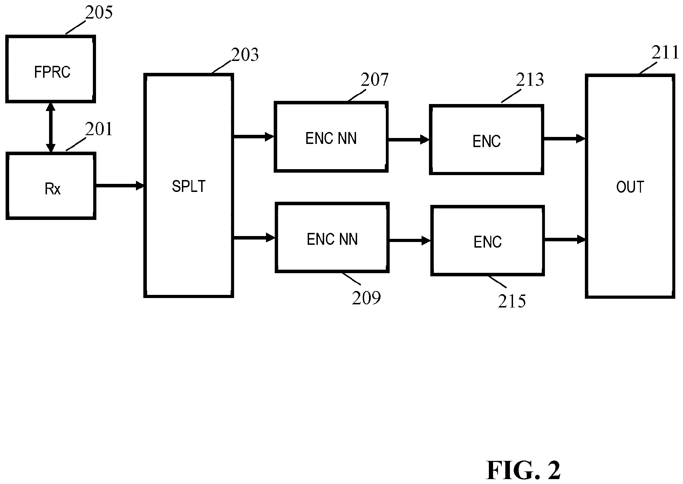

FIG. 2 illustrates an example of an audio apparatus arranged to generate an encoded audio data signal representing an audio signal. The audio apparatus may be an encoding audio apparatus and will henceforth also be referred to as the encoding audio apparatus, or simply as the encoder.

The encoder includes a receiver 201 which is arranged to receive the audio signal to be encoded. The audio signal may typically be received in the time domain and may further typically be processed as a time domain audio signal as will be described in the following. However, in some embodiments some or all of the processing may be performed using a frequency domain representation of the audio signal and indeed in many embodiments the processing may include both processing of a time domain and frequency domain representations of the audio signal.

Accordingly, in some embodiments, a frequency domain representation may be generated for the audio signal and used in the processing. In some embodiments, such frequency domain audio signal may be received from a remote source which may generate a bitstream comprising a frequency domain representation of the audio signal. In other embodiments, the remote source may generate a time domain representation of the audio signal and a local frequency transformer may be arranged to generate a (time-)frequency representation of the time domain representation. Thus, in some embodiments, the receiver 201 may receive the frequency domain audio signal from an internal source, such as an internal time-to-frequency domain transformer.

In particular, in the example of FIG. 2, the audio apparatus comprises a filter bank 205 which is arranged to generate a frequency (subband) representation of a received time domain audio signal. Thus, in some cases, the audio apparatus may comprise a filter bank 205 that is applied to the audio signal such that it is divided into frequency subbands.

The filter bank may be Quadrature Mirror Filter (QMF) bank or may e.g. be implemented by a Fast Fourier Transform (FFT), but it will be appreciated that many other filter banks and approaches for dividing an audio signal into a plurality of subband signals are known and may be used. The filterbank may specifically be a complex-valued pseudo QMF bank, resulting in e.g. 32 or 64 complex-valued sub-band signals. In many embodiments, a critically sampled filterbank such as a Modified Discrete Cosine Transform, MDCT, may be used.

The processing may be performed in time segments or time slots. In most embodiments, the audio signal is divided into time intervals/segments. For example, the audio signal may be divided into time segments of e.g. 2048, 1024, or 512 samples. In case where a frequency representation is used, such segments may then be processed to generate samples for e.g. 64, 32 or 16 subbands. Thus, in some cases, a set of samples may be determined for each subband of the downmix audio signal.

The encoder comprises a signal splitter circuit 203 that divides the audio signal into at least a first signal component and a second signal component. In many embodiments, the second signal component may be generated as a residual signal of the audio signal with the residual signal being the remaining part after extraction/subtraction of the first signal component from the audio signal.

Different approaches, criteria, and algorithms for splitting the audio signal may be used in different embodiments depending on the specific preferences and requirements of the individual embodiment. For example, in some embodiments, specific signal components with specific properties may be extracted, such as sinusoids, harmonics etc.

The signal splitter circuit 203 is coupled to a first encoding trained artificial neural network 207 which is arranged to receive the first signal component and to generate a first latent space feature set representing a waveform of the first signal component.

The signal splitter circuit 203 is also coupled to a second encoding trained artificial neural network 209 which is arranged to receive the second signal component and to generate a second latent space feature set representing a spectro-temporal shape of the second signal component.

The encoder further comprises an output generator 211 which is arranged to generate an encoded audio data signal which represents the audio signal to comprise the first latent space feature set and the second latent space feature set.

Typically, the first and second latent space feature sets are encoded to provide suitable data for the audio signal and in many embodiments, the encoder audio apparatus comprises a first encoder 213 which is arranged to encode the first latent space feature set and a second encoder 215 which is arranged to encode the second latent space feature set. However, it will be appreciated that in some embodiments the first and/or second latent space feature sets may not be encoded and there may be no such data encoding functions included. In some embodiments the output generator 211 may include functionality for generating data values for the encoded audio data signal by determining/selecting data values representing the values of the first and/or second latent space feature set.

In the encoder audio apparatus of FIG. 2, the audio signal is accordingly divided into two different signals which are represented by two different latent space feature sets that result from two trained artificial neural networks that are trained to provide feature sets that represent different properties of respectively the first and second signal components, namely with the determined features for the first signal component being dependent on and representing the waveform of the first signal component, whereas the determined features for the second signal component are dependent on, and represent, a spectro-temporal shape of the second signal component.

Thus, the first latent space feature set represents the specific and detailed signal waveform and thus provide information that may form the basis of a reconstruction of the actual first signal component, and specifically the waveform of the first signal component. In contrast, the second latent space feature set provides information that may form the basis of a generation of a signal that has the same spectro-temporal shape properties as the second signal component but which may have a different waveform. The second latent space feature set may thus provide information that allow a signal with the same/similar statistical spectro-temporal properties/features to be generated but with this signal having a different waveform than the original second signal component.

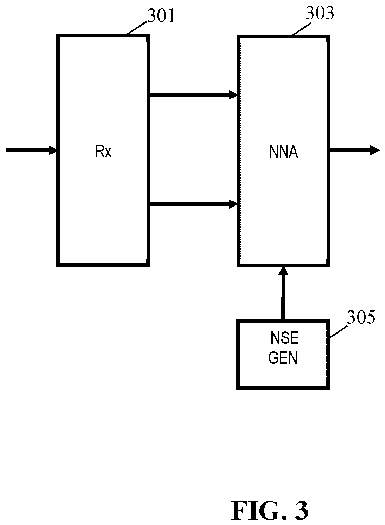

FIG. 3 illustrates an example of an audio apparatus which is arranged to generate an output audio signal from a received encoded audio signal. The audio apparatus may also be referred to as a decoder or synthesizing audio apparatus, or simply as a decoder or synthesizer.

The decoder audio apparatus comprises a receiver 301 which receives an encoded audio data signal that comprises a first latent space feature set representing a waveform of a first signal component of an audio signal, and a second latent space feature set representing a spectro-temporal shape of a second signal component of the audio signal. The decoder audio apparatus may specifically receive the encoded audio data signal generated by the encoder audio apparatus of FIG. 2 and it will be described further with reference to this scenario. The decoder is arranged/trained to seek to generate an output audio signal which is a perceptual reconstruction of the audio signal encoded by the encoder audio apparatus.

In many embodiments, the receiver 301 includes decoder functions to determine the feature values from the received encoded data of the encoded audio data signal. The receiver 301 may specifically comprise functionality for performing the reverse function/translation of the encoders 213, 215 of the encoder audio apparatus.

The receiver 301 is coupled to a trained artificial neural network arrangement 303 which is fed the first and second latent space feature sets and which is trained to generate an output audio signal based on these latent space feature sets.

The trained artificial neural network includes one or more trained artificial neural networks that are arranged to receive the first latent space feature set and the second latent space feature set as input features.

The decoder audio apparatus further comprises a noise generator 305 which is arranged to generate a noise signal. The noise signal may comprise/consist of samples that are randomly generated in accordance with a probability distribution, such as for example a Gaussian distribution. The noise signal may be a stochastic signal comprising signal values/samples following a (probability) distribution, such as a white and/or normal distribution. The noise samples for the noise signal may be generated as random signal values in accordance with a suitable distribution and noise level. For example, a random number generator with a uniform distribution may generate samples and a suitable function may convert these values to a desired distribution. In many embodiments, the noise samples may be generated to be samples from a standard normal distribution.

The noise generator 305 is coupled to the trained artificial neural network arrangement 303 and specifically the trained artificial neural network(s) of the trained artificial neural network arrangement 303 has(ve) input nodes that receive the noise signal. The trained artificial neural network arrangement 303 is trained to generate the output audio signal based on the noise signal and the two latent space feature sets. The output audio signal will accordingly include contributions that result from training to replicate the waveform of the first signal component and from training to replicate the spectro-temporal shape properties of the second signal component. The output audio signal may include a component/part that is deterministically dependent on the first latent space feature set and which specifically is generated to always be the same for the same values of the first latent space feature set. However, the output audio signal is also dependent on the noise signal and thus the output audio signal has a stochastic/non-deterministic component/property. Accordingly, the noise signal/input may result in the trained artificial neural network arrangement 303 generating different output audio signals even for the same latent space feature values being received. Thus, in addition to the deterministic component, the output audio signal may also include a non-deterministic component which is dependent on the noise signal and which accordingly has a stochastic/random/non-deterministic component and is not necessarily the same for the same input feature values.

The output audio signal may accordingly include a deterministic component which is a deterministic outcome of the latent space feature set values and which is not dependent on the noise signal. This deterministic signal component is generated by the trained artificial neural network arrangement 303 as independent of the noise signal, and may in many cases be dependent only on the received latent space features such that if the same feature values are received, the same deterministic signal component is generated by the trained artificial neural network arrangement 303. Thus, this component may be deterministic from the latent space feature set(s) in that the same signal component will be generated by the trained artificial neural network arrangement for the same values of the latent space feature sets being provided to it.

In contrast, the non-deterministic signal component generated by the trained artificial neural network arrangement 303 is dependent on the noise signal. It may be non-deterministic from the latent space feature set(s) in that the same signal component will not (necessarily) be generated by the trained artificial neural network arrangement for the same latent space feature set values being provided to it. Rather, the non-deterministic signal component is also dependent on the noise signal and thus has a stochastic/random property.

The trained artificial neural network arrangement 303 may be trained to generate the deterministic signal component (of the output audio signal) to generate/provide/have a waveform that matches the waveform represented by the first latent space feature set. The trained artificial neural network arrangement may be trained to generate the non-deterministic component (of the output audio signal) to generate/provide/have spatial-temporal shape properties that match the spatial-temporal shape properties represented by the second latent space feature set, but with a waveform that is dependent on the noise signal.

In the described system, an encoder may accordingly generate an encoded audio data signal in which an audio signal is represented by (at least two) latent space feature sets where the first latent space feature set represents features of a deterministic part (e.g. sinusoids/harmonics) of the audio signal and a second latent space feature set represents features of a non-deterministic part. The first latent space feature set is generated to represent features of the waveform of the deterministic part of the audio signal and the second latent space feature set is generated to represent spectro-temporal shape properties of the non-deterministic part.

The encoded audio data signal may be decoded using a decoder which includes one or more trained artificial neural networks receiving the coded audio data, and specifically on the received latent space feature sets. In the arrangement, the deterministic part may be reproduced by a trained artificial neural network element which is receiving the first latent space feature set and which is trained to generate a signal component/part that has a waveform corresponding to that represented by the first latent space feature set. The non-deterministic part may be reproduced by a trained artificial neural network element which has input nodes for receiving the noise signal, such as specifically for receiving white Gaussian noise samples. This trained artificial neural network element receives the second latent space feature set and is trained to generate a signal component/part that is dependent on the noise signal, and which has spectro-temporal shape properties that match those represented by the second latent space feature set.

Specifically, the non-deterministic part may be synthesized by feeding a white noise signal through a trained artificial neural network element conditioned by the second latent space feature set. This neural network element is trained to provide statistical properties matching those of the non-deterministic component/the second signal component of the encoder, but it is not necessarily trained to seek to reproduce the actual waveform or waveform samples. The second part is stochastically dependent on the second latent space feature set but is not deterministically dependent thereon.

This reflects the encoder approach where the splitter 203 may split an input signal into a deterministic and a non-deterministic signal. The deterministic signal is encoded into a discrete representation (a bit-stream) of the deterministic part using a trained artificial neural network. The non-deterministic signal is encoded into a discrete representation (a bit-stream) of the non-deterministic part using a second trained artificial neural network. This second discrete representation does not provide sufficient information for a reconstruction of the original non-deterministic waveform.

A spectro-temporal shape of a signal may typically include/represent the spectral and(/or) temporal envelopes of the downmix and generated signals. A spectro-temporal shape of a signal may be a spectro-temporal envelope of the signal. The second latent space feature set representing the spectro-temporal shape of the second signal component may provide features that represent/characterize/are dependent on the spectro-temporal shape/envelope of the second signal component. However, the second latent space feature set may not (directly/fully) represent/characterize/be dependent on the specific waveform of the second latent space feature set. In particular, different signals having the same spectro-temporal shape properties may result in the same values for the second latent space feature set. The second latent space feature set may be generated such that it provides features for a trained artificial neural network to synthesize a signal having different waveforms (specifically dependent on a noise signal also being provided to the trained artificial neural network), but with similar, or substantially the same, spectro-temporal shape/envelope as the second signal component but with similar time and(/or) spectral envelope to the time and(/or) spectral envelope of the downmix audio signal.

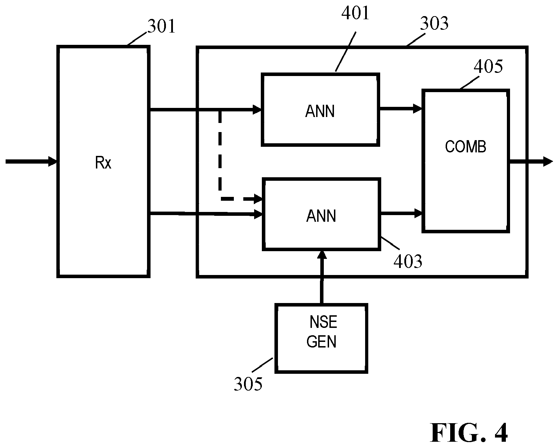

In many embodiments, the trained artificial neural network arrangement of the decoder audio apparatus may as illustrated in FIG. 4 comprise (at least) two trained artificial neural networks. It may comprise a first trained artificial neural network 401, henceforth also referred to as the first synthesizer neural network 401, which receives the first latent space feature set as input features and which generates a first signal component, henceforth also referred to as the first synthesized signal component. It may further comprise a second trained artificial neural network 403, henceforth also referred to as the second synthesizer neural network 403, with input nodes that receive the noise signal generated by the noise generator 305. The second synthesizer neural network 403 further receives the second latent space feature set as input features and generates a second signal component, henceforth also referred to as a second synthesized signal component. In addition, a combiner 405 is included that generates the audio output signal by combining (at least) the first and second synthesized signal components.

The first synthesizer neural network 401 may specifically be trained to generate the first synthesized signal component to be deterministically dependent on the first latent space feature set. The first synthesizer neural network 401 specifically does not receive the noise signal as an input, and indeed in many embodiments the only input to the first synthesizer neural network 401 may be the first latent space feature set. The first synthesizer neural network 401 is trained to seek to reconstruct the first synthesized signal component to have a waveform which matches that of the signal component represented by the first latent space feature set, i.e. which matches the waveform of the signal component from which the first latent space feature set is generated by the encoder.

The second synthesizer neural network 403 is specifically trained to generate a second synthesized signal component which is dependent on the second latent space feature set but which is not deterministically dependent on this. The second synthesizer neural network 403 specifically receives the noise signal as an input and it generates the second synthesized signal component to be dependent on and vary with the noise signal. Accordingly, different second synthesized signal components may be generated dependent on the specific noise signals and the second synthesized signal component is consequently a stochastic signal. In some embodiments, the second synthesizer neural network 403 may not have any other input data than the first latent space feature set and the noise signal.

As the second synthesized signal component is stochastic in nature by depending on the noise signal, it is not deterministically dependent on the second latent space feature set. Further, the second synthesizer neural network 403 is trained to generate the second synthesized signal component to have statistical/stochastic properties, and is not trained to seek to reproduce the waveform but rather only statistical/stochastic spectro-temporal shape/envelope properties of the signal component represented by the second latent space feature set, i.e. it may specifically seek to reproduce the second synthesized signal component as a signal component that has spectro-temporal shape properties that match the corresponding properties of the signal component from which the second latent space feature set is generated by the encoder.

The output audio signal is generated by the combiner 405 combining the first and second synthesized signal component. The combination may be a mixing of the two signals, such as specifically a weighted combination/addition. Typically, the combiner 405 may simply add the two signals together to generate the output audio signal.

In some embodiments, the second synthesizer neural network 403 may also receive the first latent space feature set as input features. This may in some embodiments allow improved generation of the second synthesized signal component.

An approach based on two synthesizer neural networks may provide particularly advantageous performance and implementation in many embodiments. It may allow the individual artificial neural networks to be optimized and specifically trained to provide a desired operation. It may reduce the required complexity and computational requirements necessary to achieve a given perceived audio quality (e.g. the number of nodes and connections may be reduced). Using multiple (more dedicated/specialized) artificial neural networks may in many cases result in improved and/or facilitated training. For example, smaller training sets may often be sufficient for training the individual artificial neural networks to a sufficient quality.

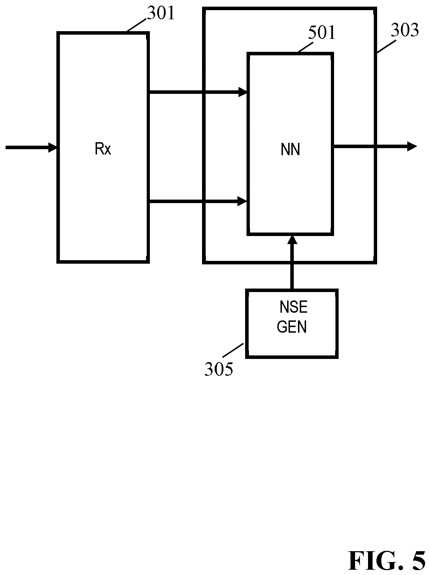

In some embodiments, the trained artificial neural network arrangement 303 may as illustrated in FIG. 5 comprise (or indeed in many cases consist in) a single trained artificial neural network which receives both the noise signal, the first latent space feature set, and the second latent space feature second set, and which directly generates the audio output signal. The single trained artificial neural network 501 accordingly has one or more output nodes that provide output values which specifically may be samples of the audio signal.

Thus, in some embodiments, a single (interconnected) neural network 501 may receive all the latent space features as well as the noise signal and may based on this proceed to directly generate the output audio signal. The neural network 501 may be trained to generate an output audio signal that perceptually matches the audio signal which was input to the encoder using a suitable perceptual match criterion as the basis for a cost function used to train the system/artificial neural network 501.

Thus, despite the encoder generating different latent space feature sets representing different properties of different signal components of the audio output signal, a single artificial neural network considering both latent space feature sets, as well as the noise signal, may be used to generate the audio output signal. In many embodiments, such a single trained artificial neural network may result in an improved audio output signal being generated with an improved perceptual fidelity.

Different approaches may in different embodiments be used to train the different artificial neural networks and in particular joint or individual training of different artificial neural networks may be applied depending on the preferences or requirements of the individual embodiment and implementation.

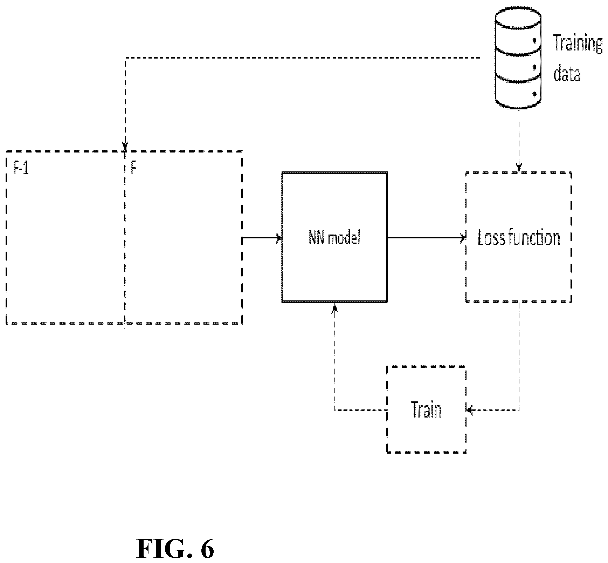

Artificial neural networks are adapted to specific purposes by a training process which is used to adapt/ tune/ modify the weights and other parameters (e.g. bias) of the artificial neural network. It will be appreciated that many different training processes and algorithms are known for training artificial neural networks. A training setup that may be used for the described artificial neural networks is illustrated in FIG. 6.

Typically, training is based on large training sets where a large number of examples of input data are provided to the network. Further, the output of the artificial neural network is typically (directly or indirectly) compared to an expected or ideal result. A cost function may be generated to reflect the desired outcome of the training process. In a typical scenario known as supervised learning, the cost (or loss) function often represents the distance between the prediction and the ground truth for a particular input data. Based on the cost function, the weights may be changed and by reiterating the process for the modified weights, the artificial neural network may be adapted towards a state for which the cost function is minimized.

Different approaches may be used to train the artificial neural networks of the described encoder and decoder apparatuses. In particular an overall (end-to-end) training may seek to result in the output of the encoder decoder system/processes that most closely has relevant perceptual properties that correspond to the input audio signal. The cost function may include a contribution from a direct comparison/correlation between the input signal and the output audio signal (e.g. comparison of waveform) and/or may include a contribution from a perceptual comparison/correlation between the input signal and the output audio signal, such as e.g. by comparing a difference between perceptual properties of the input audio signal and the audio signal. Specifically, a contribution to the cost function may come from a comparison of the spectro-temporal shape/envelope of the input audio signal and the synthesized output audio signal.

Thus, the trained artificial neural networks may be trained to provide an output audio signal that most effectively results in accurate reconstruction of the audio signal. In such a case, a cost function including a contribution based on the difference between a generated output audio signal and an original training input audio signal may be used. In other cases, more specific training of an artificial neural network may be used. For example, the training of one or more of the trained artificial neural networks may be based on a cost function that reflects a difference between corresponding properties of the generated output audio signal and the input audio signal. Specifically, a cost function may be used which has increasing cost values for an increasing statistical/spectro-temporal difference between the input audio signal and the output audio signal generated by the decoder/synthesizer audio apparatus.

Specifically, the cost function may determine a frequency distribution for the input audio signal and for the generated output audio signal in each time segment, and then determine a contribution to the cost function dependent on the amplitude/level difference between these, and typically as an increasing value for increasing difference. The training process may e.g. perform a transformation of the generated signal into frequency bins (e.g. using an FFT) and compare this to corresponding frequency bin values determined for the training downmix audio signal. Further, in many embodiments, the cost function may include a contribution which is dependent on the time domain waveform correlation between the generated output audio signal and the input audio signal, and specifically an increasing cost value may be determined for a decreasing correlation. Such approaches may train the trained artificial neural networks to generate a synthesized signal that has statistical and/or spectro-temporal properties which are similar to the input audio signal.

In more detail, during a training step an artificial neural network (or a set of such networks) may have two different flows of information from input to output (forward pass) and from output to input (backward pass). In the forward pass, the data is processed by the artificial neural network(s) as described above while in the backward pass the weights are updated to minimize the cost function. Typically, such a backward propagation follows the gradient direction of the cost function landscape. In other words, by comparing the predicted output with the ground truth for a batch of data input, one can estimate the direction in which the cost function is minimized and propagate backward, by updating the weights accordingly. Other approaches known for training artificial neural networks include for example Levenberg-Marquardt algorithm, the conjugate gradient method, and the Newton method etc.

In the present case, training may specifically include a training set comprising a potentially large number of audio signals. The training sets may include audio signals representing a number of different audio sources including e.g. recording of videos, movies, telecommunications, etc.

In addition, the training set may for each training audio signal include training reference data which represents the output of the artificial neural network(s) that is desired to be generated for the specific training audio signal. In some cases, the training audio signal may itself also be training reference data (specifically if end to end signal similarity is part of the cost function). In some embodiments training reference data may include desired properties to be generated by the artificial neural network(s) for the training audio signal, such as spectro-temporal shape properties. In some cases, some or all of the training reference data may be generated dynamically from the training audio signal and in other cases it may e.g. be provided with the training audio signal (e.g. in cases where a manual or semi-manual process has been used to generate the training reference data).

In some embodiments, training data may be audio signals in time segments corresponding to the processing time intervals of the trained artificial neural network(s) being trained, e.g. the number of samples in a training multichannel audio signal may correspond to a number of samples corresponding to the input nodes of the artificial neural network(s) being trained. Each training example may thus correspond to one operation of the artificial neural network(s) being trained. Usually, however, a batch of training samples is considered for each step to speed up and smoothen the training process. Furthermore, many upgrades to gradient descent are possible also to speed up convergence or avoid local minima in the cost function landscape.

For each training audio signal, the artificial neural network(s) being trained may perform the process to generate output data. A cost function may be evaluated to generate a cost value. Typically, a comparison between the generated output data and training reference data may be performed to determine the cost value.

Based on the cost value, the weights of the artificial neural network(s) may be updated. For example, a back-propagation approach may be used. In particular, the weights of one or all of the artificial neural networks may be updated based on the cost value. For example, given the derivative (representing the slope) of the weights with respect to the cost function the weights values are modified to go in the direction of the slope. For a simple/minima account one can refer to the training of the perceptron (single neuron) in case of backward pass of a single data input.

The process may be iterated until the artificial neural networks are considered to be trained. For example, training may be performed for a predetermined number of iterations. As another example, training may be continued until the weights change be less than a predetermined amount. Also very common, a validation stop is implemented where the network is tested again a validation metric and stopped when reaching the expected outcome.

In some cases, the training may be performed individually for each artificial neural network and in other cases the training may be joint for two or more artificial neural networks.

Specifically, the first trained artificial neural network may be trained separately in that a training process is performed in which only parameters of the first trained artificial neural network are adapted and modified. As previously mentioned, the training may be such that the first trained artificial neural network generates a first latent space feature set which represents the waveform of the first signal component. Based on the generated first latent space feature set for a given training audio signal, a reproduction of the training audio signal may be generated. A cost value may then be determined using a cost function which evaluates the difference between the training audio signal and the reproduced audio signal.

The generation of the reproduced audio signal may specifically be by a trained artificial neural network, such as specifically by the first synthesizer neural network of the decoder after this has been trained appropriately.

A similar approach may be applied to train the first synthesizer neural network of the decoder. Specifically, after training of the first encoding trained artificial neural network of the encoder, a training audio signal may be provided to the encoder with the resulting first latent space feature set then being provided to the first synthesizer neural network and the waveform of the resulting reproduced audio signal being compared to the waveform of the training audio signal to generate a cost value. A combined cost value may be determined for a large training set and used to update the parameters of the first synthesizer neural network.

A similar approach may be applied to the second encoding trained artificial neural network and to the second synthesizer neural network. However, in this case the cost function may generate a cost value which is dependent on the spectro-temporal shape difference between the resulting signals rather than dependent on a waveform difference. For example, cost values may be determined dependent on the difference between Mel spectrograms determined for the signals.

In some embodiments, combinations of joint and individual training may be used. For example, initially a joint training of all artificial neural networks may be performed (e.g. for each path (i.e. individually for the deterministic and non-deterministic paths) or for the total end to end path). Following this initial joint training, each of the individual neural networks may be trained individually while keeping all other artificial neural networks fixed. This process may be repeated a number of times. Such a problem may provide a bootstrap approach addressing the issue of individual training of one artificial neural network in some training setups requiring that other artificial neural networks involved in the process are already trained.

The training for the deterministic path (the path encoding and decoding the first signal component using the first latent space feature set and including the first encoding trained artificial neural network 207 and the first synthesizer neural network 401) is based on a cost function that includes a consideration of the waveforms of the signal, and which specifically is dependent on a waveform difference between the first signal component and the synthesized/reproduction of the first signal component. In many embodiments, the comparison of the waveforms, and specifically a waveform difference, may include a perceptual weighting. Thus, a perceptually weighted difference measure may be used.

In contrast to the deterministic path, the training for the non-deterministic path (the path encoding and decoding the second signal component using the second latent space feature set and including the second encoding trained artificial neural network 209 and the second synthesizer neural network 403) is based on a cost function that includes a consideration of the spectro-temporal shape of the signal, and which specifically is dependent on a spectro-temporal shape difference between the second signal component and the synthesized/reproduction of the second signal component.

Specifically, the first encoding trained artificial neural network 207 and/or the first synthesizer neural network 401 is trained by a cost/loss function that includes a contribution dependent on a difference between a waveform of the first signal component and a waveform of a signal generated from the first latent space feature set, and specifically of the first synthesized signal component generated by the first synthesizer neural network 401. In cases where full end to end training is employed, the first encoding trained artificial neural network 207 and/or the first synthesizer neural network 401 may be trained by a cost/loss function that includes a contribution dependent on a difference between a waveform of the input audio signal and a waveform of the generated output audio signal (after combining of the first synthesized and the second synthesized signals).

The second artificial neural network 401 and/or the second synthesizer neural network 403 is trained by a loss function including a contribution dependent on a difference between a spectro-temporal shape of the second signal component and a spectro-temporal shape of a signal generated from the second latent space feature set, namely specifically the second synthesized signal generated by the second synthesizer neural network 403. In cases where full end to end training is employed, the second encoding trained artificial neural network 209 and/or the second synthesizer neural network 403 may be trained by a cost/loss function that includes a contribution dependent on a difference between a spectro-temporal shape of the input audio signal and a spectro-temporal shape of the generated output audio signal (after combining of the first synthesized and the second synthesized signals).

In many embodiments, the first encoding trained artificial neural network 207 is trained to generate the first latent space feature set to provide waveform error minimization for a trained artificial neural network replicating the first signal component from the first latent space feature set and the second trained artificial neural network is trained to generate the second latent space feature set to provide spectro-temporal shape error minimization for a trained artificial neural network replicating the second signal component from the second latent space feature set.

The first synthesizer neural network 401 may specifically be trained to generate the first synthesized signal component to match a waveform of a first signal portion of the audio signal (namely the first signal component generated by the signal splitter circuit 203) and the second synthesizer neural network 403 is trained to generate a signal component to match a spectro-temporal shape of a second signal portion of the audio signal (namely the second signal component generated by the signal splitter circuit 203).

As mentioned, the signal splitter circuit 203 is arranged to split the input audio signal into a first and second signal component which are then separately encoded by the different artificial neural networks 207, 209 generating respectively the first and second latent space feature sets. Different approaches for splitting the audio signal into the first and second signal components may be used in different embodiments. In some embodiments, a low complexity approach may be used, such as simply filtering the input audio signal to generate a high frequency signal component and a low frequency signal component.

In many embodiments, the first and second signal components may be generated such that the two signals add up to the audio signal, and in particular such that the input audio signal is equal to the addition of the first signal component and the second signal component. In many embodiments, the signal splitter circuit 203 may be arranged to generate one of the first and second signal component as the residual signal resulting from removing/extracting/subtracting the other signal component from the input audio signal.

In many cases, the signal splitter circuit 203 may be arranged to generate the first signal component to include signal components for which the exact waveform is perceptually significant, and in particular it may be arranged to extract signal components with specific properties that are associated with signal components for which the waveform reproduction is important for the perception. The second signal component may then be generated by subtracting the first signal component from the input audio signal, i.e. it may be generated as the residual signal after extraction of the first signal component.

In many embodiments, the signal splitter circuit 203 may be arranged to generate the first signal component to include sinusoidal and/or harmonic signal components.

Specifically, the signal splitter circuit 203 may split an input audio signal $x[n]$ into two parts, namely a first (deterministic) part $x\_d[n]$ and a second (non-deterministic part) $x\_n[n]$. The goal of the split may specifically be to create two signals $x\_d[n]$ and $x\_n[n]$, such that $x\_d[n]+x\_n[n]=x[n]$. The deterministic part represents that part of the signal for which perceptually it is important to reconstruct the exact waveform. This may therefore typically comprise/consist of elements such as sinusoidal peaks and/or harmonic grids (consisting of a grid of harmonic peaks). The non-deterministic part may then be the part for which it is perceptually irrelevant (or less relevant) to reconstruct the exact waveform, such as noise-like elements of the audio signal. The split can in many embodiments be achieved by traditional parametric methods such as peak picking in the frequency domain to find the deterministic part and using the remaining residual signal as the non-deterministic part (ref. e.g. Y. Stylianou, "Efficient Decomposition of Speech Signals Into a Deterministic and a Stochastic Part," Fourth International Symposium on Signal Processing and Its Applications, Gold Coast, QLD, Australia, 1996, pp. 5-8.). In some embodiments, the signal splitter circuit 203 may in itself include a trained artificial neural network which is trained to achieve such separation (see e.g. Zheng, Chengyu, et al. "Interactive speech and noise modeling for speech enhancement." Proceedings of the AAAI Conference on Artificial Intelligence. Vol. 35. No. 16. 2021). Such an artificial neural network may be trained using end-to-end training and thus e.g. in some embodiments be trained together with the other neural networks of the system.

In some embodiments, the splitting may be performed in the frequency- or subband-domain, e.g. by processing/analyzing frequency/subband signals generated by the filter bank 205.

In some embodiments, the encoding of the latent space feature set values may be an adaptive approach where suitable codes are determined dynamically and dependent on the signal properties. Indeed, in some embodiments, the first and/or second encoder 213, 215 of the encoder audio apparatus may comprise a trained artificial neural network which is trained to generate suitable encoding values for encoding the values of the latent space feature sets output by respectively the first encoding trained artificial neural network 207 and second encoding trained artificial neural network 209. Such an approach may lead to a highly efficient encoding of the latent space feature sets and may result in a very compact representation and a low data rate for the encoded audio data signal. Indeed, in some cases, the latent space feature sets, and thus the input audio signals, may for each time segment of the order 50-300msec be represented by as little as a few tens of, or indeed in some cases less than ten, parameter values.

The encoding of the latent space feature sets (or at least one or more of the feature values) may be by a reference to an entry of a codebook which comprises entries for different values of the latent space feature set. Thus, a codebook may be used by the encoder and decoder audio apparatus with the encoded audio data signal including one or more indications of an index to an entry in the codebook. Each of the entries in the codebook accordingly includes one or more values for one or more of the features of the respective latent space feature set. The encoders 213,215 may thus determine indices to entries in the codebook that best represent the determined values of the latent space feature sets. The decoder audio apparatus may have the same codebook and thus can determine the values of the latent space feature sets by extracting the values stored for the entries indicated in the encoded audio data signal. Such an approach may provide efficient communication and reduced data rate, especially when an efficient codebook is available.

In some embodiments, the codebook itself may be dynamically determined and adapted to provide a more efficient representation. Indeed, in some embodiments, the encoders 213, 215 may each include a trained neural network which is arranged to determine codebook entries based on the (previously) determined latent space feature sets. Similarly, the receiver 301 of the decoder audio apparatus may comprise a corresponding trained artificial neural network which also determines entries for the codebook based on the (previously) received latent space feature set values. Accordingly, by using the same approach and correspondingly trained neural networks at the encoder audio apparatus and the decoder audio apparatus, the same codebook may be dynamically generated and used at both ends.

The training of the codebook artificial neural networks may be a joint training together with the training of the other encoder and decoder neural networks. As another example, the other artificial neural networks may first be trained with the latent space feature sets being directly exchanged from the encoder audio apparatus to the decoder audio apparatus without any encoding or compression. After this training, the system may proceed to train the codebook neural networks without adapting the other neural networks.

In many embodiments, the encoder audio apparatus may implement some functions using elements of a VQVAE approach. In the following, a more detailed description of some possible specific implementations of the encoder and decoder audio apparatuses using such considerations will be described. In the examples, the latent space feature sets will also be encoded using dynamically determined codebooks and cost functions that are also particularly suitable for a joint training with the corresponding codebook artificial neural networks will be described. It will be appreciated that for examples where no such codebook neural networks are included, the corresponding contributions to the cost values may be disregarded.

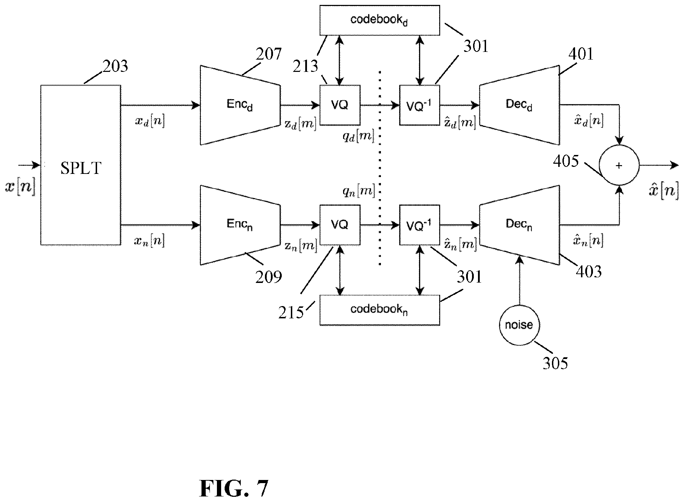

An example of elements of a specific embodiment of an encoder audio apparatus and decoder apparatus is illustrated in FIG. 7. In the approach, the input audio signal is divided into two signal components which are then each encoded using a similar approach to VQVAE, but further with the two signal components being encoded using different principles. In particular, the VQVAE encoding neural networks are differently trained with one path using an encoding trained artificial neural network that is trained to generate an latent space feature set reflecting and allowing reproduction of the waveform of the signal component whereas the other is trained to generate a latent space feature set reflecting and allowing reproduction of a spectro-temporal shape of the signal component (but which generally does not include sufficient information for reproducing the exact waveform).

FIG. 7 illustrates an example of an encoder and decoder corresponding to the examples of FIG. 2 and 4. In the encoder, the input audio signal x[n] is split into two parts, namely a deterministic part $x_d[n]$ (the first signal component) and a non-deterministic part $x_n[n]$ (the second signal component). In the example, the goal of the split is to create two signals $x_d[n]$ and $x_n[n]$, such that $x_d[n] + x_n[n] = x[n]$. The deterministic part represents that part of the signal for which it is perceptually important to reconstruct the exact waveform. This will typically consist of elements such as sinusoidal peaks and/or harmonic grids (consisting of a grid of harmonic peaks). The non-deterministic part will be the part for which it is perceptually irrelevant (or at least less relevant) to reconstruct the exact waveform, such as noise-like elements of the audio signal.

The deterministic part $x_d[n]$ is encoded using a neural-network based coding scheme which in the specific example may be similar to a VQ-VAE approach as described in Aaron van den Oord and Oriol Vinyals and Koray Kavukcuoglu, "Neural Discrete Representation Learning", 2018, arXiv 1711.00937. The approach combines a so-called auto-encoder network $Enc_d$ with a vector quantizer VQ.

The auto-encoder network 207 generates a latent space feature set/latent-space vector $z_d[m]$ for every frame $m$ of the input signal $x_d[n]$. The vector is then quantized into a single value $q_d[m]$ using a vector quantizer bottleneck VQ 213 with a codebook "$codebook_d$" that is shared between encoder and decoder. The value $q_d[m]$ is included in the bit-stream/encoded audio data signal.

Similarly, the non-deterministic signal part $x_n[n]$ is encoded using an auto-encoder network $Enc_n$ 209 and a vector quantizer bottleneck VQ 215. This auto-encoder network generates a latent space feature set/ latent-space vector $z_n[m]$

for every frame *m* of the input signal $x_n[n]$. The vector is then quantized using a codebook "codebook$_n$" that is shared between encoder and decoder into a single value $q_n[m]$ that is embedded into the bit-stream.

The latent-space vectors $z_d[m]$ and $z_n[m]$ differ in that the deterministic latent space vector $z_d[m]$ is generated by the trained artificial neural network to allow a waveform reconstruction of signal $x_d[n]$ whereas the non-deterministic latent space vector $z_n[m]$ is generated by the trained artificial neural network to only allow reconstruction of the signal $x_n[n]$ in a stochastic sense. Specifically, rather than seek to represent the waveform of the signal (as in e.g. VQ-VAE), the second latent space feature vector/set is generated to represent and allow reconstruction of the spectro-temporal shape of the signal $x_n[n]$. It should be noted that the frames for the deterministic and non-deterministic path/signals are not necessarily synchronized.

At the decoder side, the quantized representations $q_d[m]$ and $q_n[m]$ are decoded into the latent space feature sets/latent space vectors $\hat{z}_d[m]$ and $\hat{z}_n[m]$ respectively. Each latent space vector/feature set is then decoded using the decoder networks Deca and Dec$_n$ (401, 403) respectively. The decoder networks Dec$_d$ and Dec$_n$ reconstruct the signals $\hat{x}_d[n]$ and $\hat{x}_n[n]$ respectively, that are summed at the output to the final reconstructed signal $\hat{x}[n]$. The decoder network Dec$_n$ 403 is further different from a traditional VQVAE scheme by having a noise signal input, and specifically in that typically a white, normally distributed noise signal is processed by the network Dec$_n$ 403 such that the spectro-temporal shape of the reconstructed signal $\hat{x}_n[n]$ is similar to the shape of the signal $x_n[n]$.

The training may be performed that includes different cost value contributions, and specifically including contributions that relate to overall signal reconstruction and which also takes into account particular features of generating the codebook.

Specifically, for the deterministic part, a three term VQVAE cost/loss function can be employed:

$$L_d = \log\left(p\left(x_d \middle| \hat{z}_d(x_d)\right)\right) + \|sg[z_d(x_d)] - e_d\|_2^2 + \beta\|z_d(x_d) - sg[e_d]\|_2^2$$

The first term of the loss function is the reconstruction loss, the reconstruction of the signal $x_d$, given the quantized codebook representation $\hat{z}_d(x_d)$. The second term, containing the "stop-gradient operator" $sg[.]$ is the codebook loss term, learning the embedding space by adapting the codebook e given the encoder output $z_d(x_d)$. The final term is the commitment loss, ensuring the encoder output commits to the codebook.

For the non-deterministic part, a different/adapted loss function may be used:

$$L_n = \log\left(p\left(\mathcal{F}\{x_n\} \middle| \hat{z}_n(x_n)\right)\right) + \|sg[z_n(x_n)] - e_n\|_2^2 + \beta\|z_n(x_n) - sg[e_n]\|_2^2$$

The second and the third term are equivalent to the deterministic part. They optimize the codebook and ensure that the encoder commits to the codebook. The first term is adapted such that a set of features, given by the function $\mathcal{F}\{.\}$ is reconstructed.

The features given by the function $\mathcal{F}\{.\}$ specifically comprise or consist in features representing the spectro-temporal shape (but not the waveform) of a signal.

An example of the feature function could be the output of a Mel Frequency Cepstral Coefficients (MFCC) transformation. The MFCC proved a perceptually relevant spectro-temporal representation of an input signal.

In some embodiments, the approach may include that the non-deterministic decoder Dec$_n$ 403 in addition to the decoded latent space vector $\hat{z}_n[m]$, also receives the decoded latent space vector from the deterministic part $\hat{z}_d[m]$.

A possible loss function for this example could be:

$$L_n = \log\left(p\left(\mathcal{F}\{x_n\} \middle| \hat{z}_n(x_n), \hat{z}_d(x_d)\right)\right) + \|sg[z_n(x_n)] - e_n\|_2^2 + \beta\|z_n(x_n) - sg[e_n]\|_2^2$$

In this way the decoder Dec$_n$ 403 would be trained to learn how to reconstruct the features of the function $\mathcal{F}\{.\}$ given the outputs of both the deterministic and the non-deterministic part. This has the advantage that the spectro-temporal representations of both the deterministic part as well as the non-deterministic part are related, yielding better reconstruction.

Furthermore, given a pre-trained path for the deterministic part, the reconstruction loss during training can also be changed to assure the features of the overall reconstruction match, such as e.g. by using the cost/loss function:

$$L_n = \log\left(p\left(\mathcal{F}\{sg[x_d] + x_n\} \middle| \hat{z}_n(x_n), \hat{z}_d(x_d)\right)\right) + \|sg[z_n(x_n)] - e_n\|_2^2 + \beta\|z_n(x_n) - sg[e_n]\|_2^2$$

In an example of using only a single decoder trained artificial neural network, i.e. where the deterministic and non-deterministic decoders/trained artificial neural networks can be considered to be merged into a single decoder trained artificial neural network, an overall loss function could be defined as:

$$L = \log\left(p\left(x_d\middle|\hat{z}_d(x_d)\right)\right) + \alpha \log\left(p\left(\mathcal{F}\{sg[x_d] + x_n\}\middle|\hat{z}_n(x_n), \hat{z}_d(x_d)\right)\right) + \|sg[z_d(x_d)] - e_d\|_2^2$$

$$+ \|sg[z_n(x_n)] - e_n\|_2^2 + \beta_d\|z_d(x_d) - sg[e_d]\|_2^2 + \beta_n\|z_n(x_n) - sg[e_n]\|_2^2$$

The first and the second terms are the reconstruction losses, weighted with a parameter $\alpha$ to balance the reconstruction of the deterministic signal and the overall feature representation.

It will be appreciated that the waveform comparison/difference may be a direct comparison of the waveforms but that in many embodiments may reflect a perceptual difference. For example, determining a cost value may be based on a waveform match that may incorporate a weighting filter arranged to create a perceptually relevant waveform match.

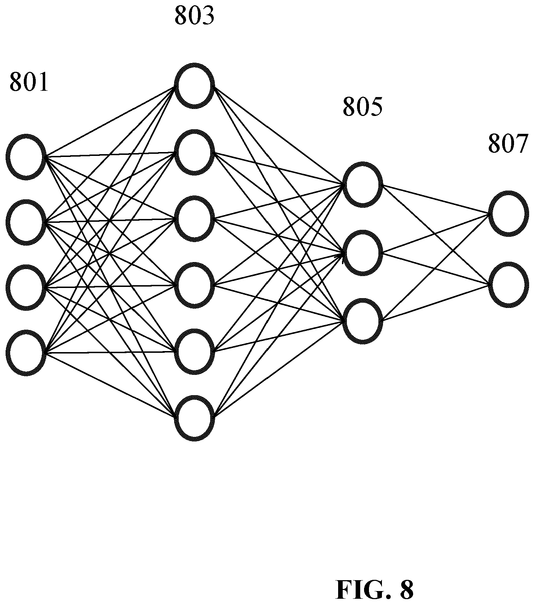

An artificial neural network as used in the described functions may be a network of nodes arranged in layers and with each node holding a node value. FIG. 8 illustrates an example of a section of an artificial neural network.

The node value for a given node may be calculated to include contributions from some or often all nodes of a previous layer of the artificial neural network. Specifically, the node value for a node may be calculated as a weighted summation of the node values of all the nodes output of the previous layer. Typically, a bias may be added and the result may be subjected to an activation function. The activation function provides an essential part of each neuron by typically providing a non-linearity. Such non-linearities and activation functions provide a significant effect in the learning and adaptation process of the artificial neural network. Thus, the node value is generated as a function of the node values of the previous layer.

The artificial neural network may specifically comprise an input layer 801 comprising a plurality of nodes receiving the input data values for the artificial neural network. Thus, the node values for nodes of the input layer may typically directly be the input data values to the artificial neural network and thus may not be calculated from other node values.

The artificial neural network may further comprise none, one, or more hidden layers 803, 805 or processing layers. For each of such layers, the node values are typically generated as a function of the node values of the nodes of the previous layer, and specifically a weighted combination and added bias followed by an activation function (such as a sigmoid, ReLU, or Tanh function may be applied).

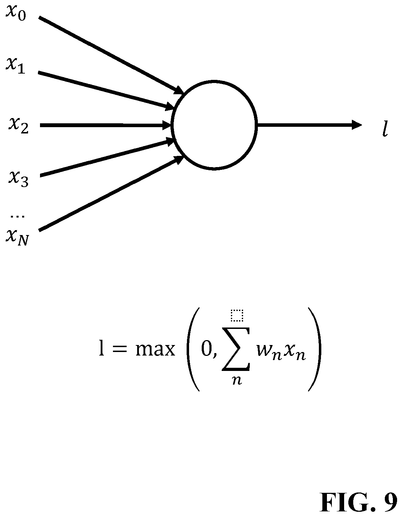

Specifically, as shown in FIG. 9, each node, which may also be referred to as a neuron, may receive input values (from nodes of a previous layer) and therefrom calculate a node value as a function of these values. Often, this includes first generating a value as a linear combination of the input values with each of these weighted by a weight:

$$k = \sum_n w_n x_n$$

where w refers to weights, x refers to the nodes of the previous layer and n is an index referring to the different nodes of the previous layer.

An activation function may then be applied to the resulting combination. For example, the node value l may be determined as:

$$l = f(k)$$

where the function may for example be a Rectified Linear Unit (as described in Xavier Glorot, Antoine Bordes, Yoshua Bengio Proceedings of the Fourteenth International Conference on Artificial Intelligence and Statistics, PMLR 15:315-323, 2011) function:

$$f(k) = ReLU(k) = \max(0, k)$$

Other often used functions include a sigmoid function or a tanh function. In many embodiments, the node output or value may be calculated using a plurality of functions. For example, both a ReLU and Sigmoid function may be combined using an activation function such as:

$$f(k) = ReLU(k) + \sigma(k)$$

Such operations may be performed by each node of the artificial neural network (except for typically the input nodes).

The artificial neural network further comprises an output layer 807 which provides the output from the artificial neural network, i.e. the output data of the artificial neural network is the node values of the output layer. As for the hidden/ processing layers, the output node values are generated by a function of the node values of the previous layer. However, in contrast to the hidden/ processing layers where the node values are typically not accessible or used further, the node values of the output layer are accessible and provide the result of the operation of the artificial neural network.

A number of different networks structures and toolboxes for artificial neural networks have been developed and in many embodiments the artificial neural network may be based on adapting and customizing such a network. An example of a network architecture that may be suitable for the applications mentioned above is WaveNet by van den Oord et al which is described in Oord, Aaron van den, Sander Dieleman, Heiga Zen, Karen Simonyan, Oriol Vinyals, Alex Graves, Nal Kalchbrenner, Andrew Senior, and Koray Kavukcuoglu. "Wavenet: A generative model for raw audio." arXiv preprint arXiv: 1609.03499 (2016).

WaveNet is an architecture used for the synthesis of time domain signals using dilated causal convolution, and has been successfully applied to audio signals. For WaveNet the following activation function is commonly used:

$$\mathbf{z} = \tanh\left(W_{f,k} * \mathbf{x}\right) \odot \sigma\left(W_{g,k} * \mathbf{x}\right),$$

where * denotes a convolution operator, $\odot$ denotes an element-wise multiplication operator, $\sigma(\cdot)$ is a sigmoid function, k is the layer index, f and g denote filter and gate, respectively, and W represents the weights of the learned artificial neural network. The filter product of the equation may typically provide a filtering effect with the gating product providing a weighting of the result which may in many cases effectively allow the contribution of the node to be reduced to substantially zero (i.e. it may allow or "cutoff" the node providing a contribution to other nodes thereby providing a "gate" function). In different circumstances, the gate function may result in the output of that node being negligible, whereas in other cases it would contribute substantially to the output. Such a function may substantially assist in allowing the artificial neural network to effectively learn and be trained.

An artificial neural network may in some cases further be arranged to include additional contributions that allow the artificial neural network to be dynamically adapted or customized for a specific desired property or characteristics of the generated output. For example, a set of values may be provided to adapt the artificial neural network. These values may be included by providing a contribution to some nodes of the artificial neural network. These nodes may be specifically input nodes but may typically be nodes of a hidden or processing layer. Such adaptation values may for example be weighted and added as a contribution to the weighted summation/ correlation value for a given node. For example, for WaveNet such adaptation values may be included in the activation function. For example, the output of the activation function may be given as:

$$\mathbf{z} = \tanh\left(W_{f,k} * \mathbf{x} + V_{f,k} * \mathbf{y}\right) \odot \sigma\left(W_{g,k} * \mathbf{x} + V_{g,k} * \mathbf{y}\right)$$

where y is a vector representing the adaptation values and V represents suitable weights for these values.

The above description relates to an artificial neural network approach that may be suitable for many embodiments and implementations. However, it will be appreciated that many other types and structures of artificial neural network may be used. Indeed, many different approaches to artificial neural networks have been, and are being, developed including artificial neural networks using complex structures and processes that differ from the ones described above. The approach is not limited to any specific artificial neural network approach and any suitable approach may be used without detracting from the invention.

In many embodiments, the artificial neural network may advantageously be a generative model such as a diffusion model artificial neural network. This may provide a particularly efficient and high quality generation of an auxiliary signal. In particular, generative models may include generative adversarial networks, variational autoencoders, and diffusion models among others. The Inventors have realized that a diffusion model approach provides a particular efficient operation and addresses many issues of many conventional approaches and indeed provides particularly advantageous operation over other (more common) artificial neural network approaches and structures.

In some embodiments, the artificial neural networks may specifically be implemented using Convolutional Artificial Neural Networks (CNNs) but it will be appreciated that many other types and architectures of neural networks may be used.

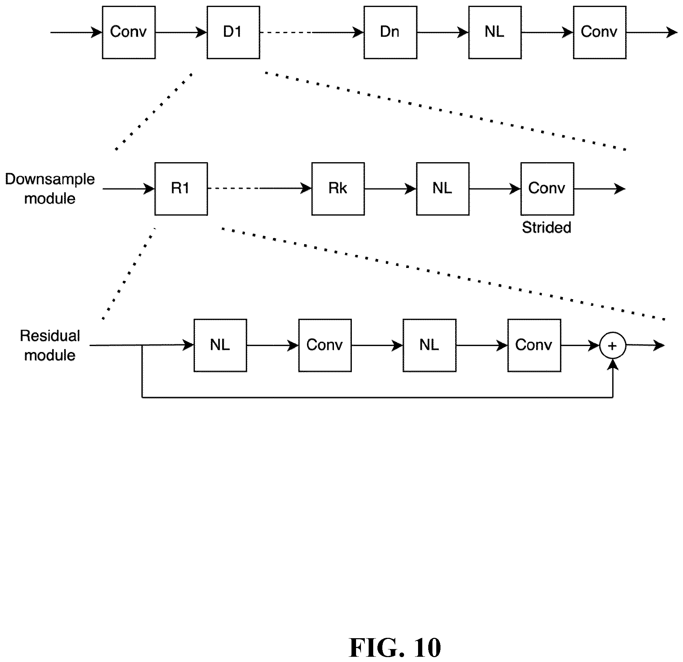

FIG. 10 illustrates an example of encoder neural network architecture that could be used for both the deterministic and the non-deterministic part. The time domain signals are fed through a convolutional layer Conv, and a sequence of downsample modules D1, ..., Dn, followed by a non-linear element NL and another convolutional layer Conv. Each downsample layer consists of a sequence of residual modules R1, ..., Rk, followed by a non-linear element and a strided convolution Conv, effectively realizing the downsampling. Each residual module consists of a sequence of non-linear elements NL and convolutions Conv, to which the input signal is added. Typically, the first convolution Conv in the residual module is a dilated convolution, whereas the second convolution is a simple 1x1 convolution.

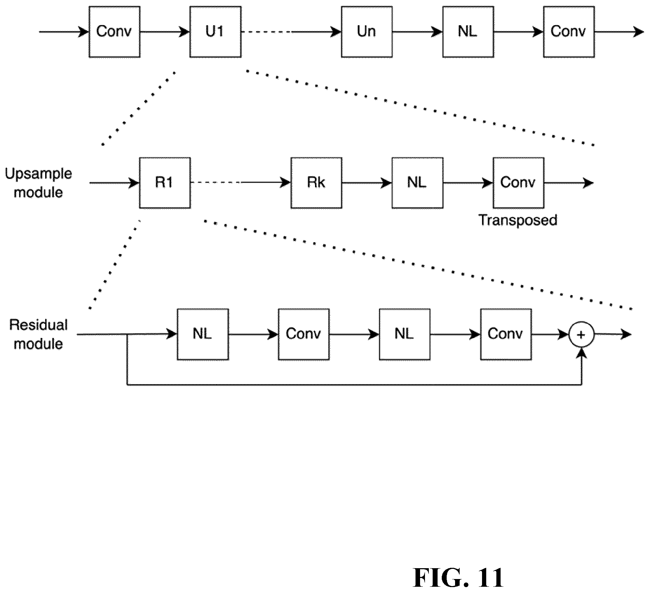

FIG. 11 illustrates an example decoder architecture for the deterministic part. It follows the same architecture as the encoder, but the downsampler modules are now replaced by upsample modules U1, ..., Un.

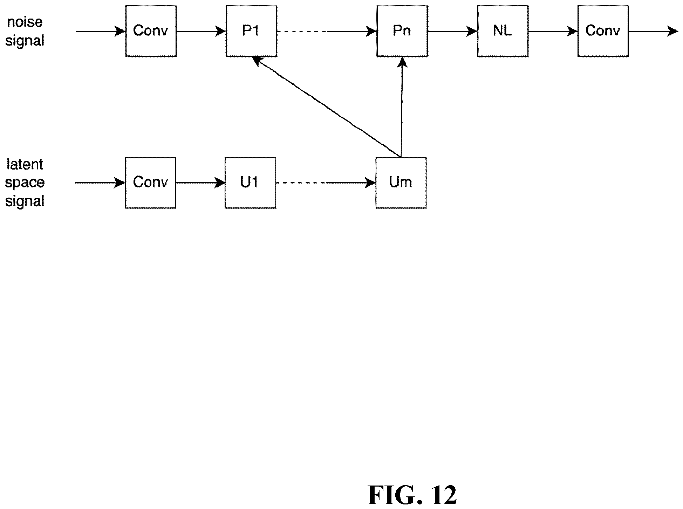

FIG. 12 illustrates an example decoder architecture for the non-deterministic signal path. The input noise signal is effectively not upsampled. Instead, it is processed by a set of processing blocks P1, ..., Pn that process the noise signal. Each processing block P could consist of a series of residual blocks R1, ..., Rk followed by a non-linear element and a convolution Conv. In contrast to the upsample and downsample module, the sample rate is not changed by the last convolutional block Conv in this series. Next to the noise input signal, the processing blocks P1, ..., Pn receive the upmixed latent space representation, realised by a convolution Conv and a series of upmix blocks U1, ... Um.

The previous description has focused on embodiments wherein the input signal is split into two different signal parts. However, it will be appreciated that in other embodiments, the signal may be split into more than two signal components. The first two signal components may be processed (encoded/decoded) as described with any additional signal components being encoded in any suitable way, including specifically using the same approach as one of the described paths/approaches.

For example, in some embodiments, the signal may be split into three different signal components, including for example two deterministic signal components. In such cases, the described two path approach may be extended to have three (or more) parallel paths with the additional paths typically being arranged to use a processing corresponding to one of the described paths for the two path approach. For example, the input audio signal may be decomposed into three parts, such as specifically a harmonic, a percussive, and a noise signal. In such cases, the approach may in addition to a non-deterministic path approach being used for the noise component include two deterministic paths, namely one encoding and decoding the harmonic part and one encoding and decoding the percussive part.

The audio apparatus(s) may specifically be implemented in one or more suitably programmed processors. In particular, the artificial neural networks may be implemented in one more such suitably programmed processors. The different functional blocks, and in particular the artificial neural network, may be implemented in separate processors and/or may e.g. be implemented in the same processor. An example of a suitable processor is provided in the following.

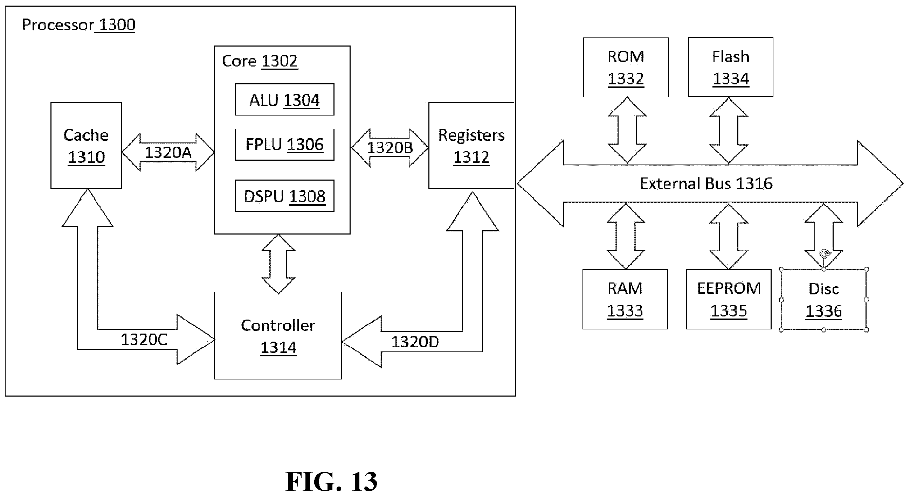

FIG. 13 is a block diagram illustrating an example processor 1300 according to embodiments of the disclosure. Processor 1300 may be used to implement one or more processors implementing an apparatus as previously described or elements thereof (including in particular one more artificial neural network). Processor 1300 may be any suitable processor type including, but not limited to, a microprocessor, a microcontroller, a Digital Signal Processor (DSP), a Field ProGrammable Array (FPGA) where the FPGA has been programmed to form a processor, a Graphical Processing Unit (GPU), an Application Specific Integrated Circuit (ASIC) where the ASIC has been designed to form a processor, or a combination thereof.

The processor 1300 may include one or more cores 1302. The core 1302 may include one or more Arithmetic Logic Units (ALU) 1304. In some embodiments, the core 1302 may include a Floating Point Logic Unit (FPLU) 1306 and/or a Digital Signal Processing Unit (DSPU) 1308 in addition to or instead of the ALU 1304.

The processor 1300 may include one or more registers 1312 communicatively coupled to the core 1302. The registers 1312 may be implemented using dedicated logic gate circuits (e.g., flip-flops) and/or any memory technology. In some embodiments the registers 1312 may be implemented using static memory. The register may provide data, instructions and addresses to the core 1302.

In some embodiments, processor 1300 may include one or more levels of cache memory 1310 communicatively coupled to the core 1302. The cache memory 1310 may provide computer-readable instructions to the core 1302 for execution. The cache memory 1310 may provide data for processing by the core 1302. In some embodiments, the computer-readable instructions may have been provided to the cache memory 1310 by a local memory, for example, local memory attached to the external bus 1316. The cache memory 1310 may be implemented with any suitable cache memory type, for example, Metal-Oxide Semiconductor (MOS) memory such as Static Random Access Memory (SRAM), Dynamic Random Access Memory (DRAM), and/or any other suitable memory technology.

The processor 1300 may include a controller 1314, which may control input to the processor 1300 from other processors and/or components included in a system and/or outputs from the processor 1300 to other processors and/or components included in the system. Controller 1314 may control the data paths in the ALU 1304, FPLU 1306 and/or DSPU 1308. Controller 1314 may be implemented as one or more state machines, data paths and/or dedicated control logic. The gates of controller 1314 may be implemented as standalone gates, FPGA, ASIC or any other suitable technology.

The registers 1312 and the cache 1310 may communicate with controller 1314 and core 1302 via internal connections 1320A, 1320B, 1320C and 1320D. Internal connections may be implemented as a bus, multiplexer, crossbar switch, and/or any other suitable connection technology.

Inputs and outputs for the processor 1300 may be provided via a bus 1316, which may include one or more conductive lines. The bus 1316 may be communicatively coupled to one or more components of processor 1300, for example the controller 1314, cache 1310, and/or register 1312. The bus 1316 may be coupled to one or more components of the system.

The bus 1316 may be coupled to one or more external memories. The external memories may include Read Only Memory (ROM) 1332. ROM 1332 may be a masked ROM, Electronically Programmable Read Only Memory (EPROM) or any other suitable technology. The external memory may include Random Access Memory (RAM) 1333. RAM 1333 may be a static RAM, battery backed up static RAM, Dynamic RAM (DRAM) or any other suitable technology. The external memory may include Electrically Erasable Programmable Read Only Memory (EEPROM) 1335. The external memory may include Flash memory 1334. The External memory may include a magnetic storage device such as disc 1336. In some embodiments, the external memories may be included in a system.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc do not preclude a plurality. Reference signs in the claims are provided merely as a clarifying example shall not be construed as limiting the scope of the claims in any way.

**Claims**

1. An audio apparatus comprising:

   a receiver (201) arranged to receive an audio signal;
   a signal splitter circuit (203) arranged to divide the audio signal into at least a first signal component and a second signal component;
   a first trained artificial neural network (207) arranged to receive the first signal component and to generate a first latent space feature set representing a waveform of the first signal component;
   a second trained artificial neural network (209) arranged to receive the second signal component and to generate a second latent space feature set representing a spectro-temporal shape of the second signal component; and
   an output generator (211) arranged to generate an encoded audio data signal representing the audio signal to comprise the first latent space feature set and the second latent space feature set.

2. The audio apparatus of claim 1 wherein the first trained artificial neural network (207) is trained to generate the first latent space feature set to provide waveform error minimization when replicating the first signal component from the first latent space feature set, and the second trained artificial neural network (209) is trained to generate the second latent space feature set to provide spectro-temporal shape error minimization when replicating the second signal component from the second latent space feature set.

3. The audio apparatus of claim 1 or 2 wherein the first artificial neural network (207) is trained by a loss function including a contribution dependent on a difference between a waveform of one of the audio signal and the first signal component and a waveform of a signal generated from the first latent space feature set.

4. The audio apparatus of any previous claim wherein the second artificial neural network (209) is trained by a loss function including a contribution dependent on a difference between a spectro-temporal shape of one of the audio signal and the second signal component and a waveform of a signal generated from the second latent space feature set.

5. The audio apparatus wherein the output generator (211) is arranged to represent at least one of the first latent space feature set and the second latent space feature second set by a data value of the encoded audio data signal, the data value being a reference to an entry of a codebook comprising a plurality of entries providing different values for a latent space feature set, and wherein at least some entries of the codebook are determined by a trained network jointly trained with at least one of the first trained artificial neural network and the second trained artificial neural network.

6. An audio apparatus comprising:

   a receiver (301) arranged to receive an encoded audio data signal representing an audio signal, the encoded audio data signal comprising:

   a first latent space feature set representing a waveform of a first signal component of the audio signal, and
   a second latent space feature set representing a spectro-temporal shape of a second signal component of the audio signal;

   a noise generator (305) arranged to generate a noise signal;
   a trained artificial neural network arrangement (303) arranged to generate an output audio signal, the trained artificial neural network arrangement (303) having input nodes for receiving the noise signal and being arranged to receive the first latent space feature set and the second latent space feature as input features.

7. The audio apparatus of claim 6 wherein the trained artificial neural network arrangement (303) comprises a single trained artificial neural network (501) receiving the noise signal, the first latent space feature set, and the second latent space feature second set and having output values providing samples of the audio signal.

8. The audio apparatus of claim 6 wherein the trained artificial neural network arrangement (303) comprises:

   a first trained artificial neural network (401) arranged to receive the first latent space feature set as input features and to generate a first signal component;
   a second trained artificial neural network (403) having input nodes for receiving the noise signal and being arranged to receive the second latent space feature set as input features and to generate a second signal component; and
   a combiner (405) arranged to generate the audio signal as a combination of the first signal component and the second signal component.

9. The audio apparatus of claim 8 wherein the first trained artificial neural network (401) is trained to generate the first signal component to match a waveform of a first signal portion of the audio signal and the second trained artificial neural network (403) is trained to generate the second signal component to match a spectro-temporal shape of a second signal portion of the audio signal, the second signal portion being a residual portion of the audio signal resulting from a removal of the first signal portion from the audio signal.

10. The audio apparatus of any of claim 8 or 9 and wherein the first signal component is deterministically dependent on the first latent space feature set and the second signal component is not deterministically dependent on the second latent space feature second set.

11. The audio apparatus of any of claims 8-10 wherein the second trained artificial neural network (403) is arranged to further receive the first latent space feature set as input features.

12. An audio system comprising an audio apparatus of any of claims 1 to 5 arranged to generate the encoded audio data signal and an audio apparatus of any of claims 6 to 11 arranged to reconstruct the audio signal from the encoded audio data signal.

13. A method of generating an encoded audio data signal, the method comprising:

receiving an audio signal;

dividing the audio signal into at least a first signal component and a second signal component;

a first encoding trained artificial neural network (207) receiving the first signal component and generating a first latent space feature set representing a waveform of the first signal component;

a second encoding trained artificial neural network (209) receiving the second signal component and generating a second latent space feature set representing a spectro-temporal shape of the second signal component; and

generating an encoded audio data signal representing the audio signal to comprise the first latent space feature set and the second latent space feature set.

14. A method of generating an output audio signal, the method comprising:

receiving an encoded audio data signal representing an audio signal, the encoded audio data signal comprising:

a first latent space feature set representing a waveform of a first signal component of the audio signal, and
a second latent space feature set representing a spectro-temporal shape of a second signal component of the audio signal;

generating a noise signal;

a trained artificial neural network arrangement (303) generating an output audio signal, the trained artificial neural network arrangement (303) having input nodes receiving the noise signal, the first latent space feature set, and the second latent space feature as input features.

15. A method of encoding and decoding an audio signal comprising, the method comprising an encoder apparatus performing the steps of claim 13 and transmitting the encoded audio data signal to a decoder apparatus performing the steps of claim 14.

**FIG. 1**

**FIG. 2**

**FIG. 3**

**FIG. 4**

**FIG. 5**

**FIG. 6**

**FIG. 7**

FIG. 8

$$l = \max\left(0, \sum_{n} w_n x_n\right)$$

**FIG. 9**

**FIG. 10**

FIG. 11

**FIG. 12**

**FIG. 13**

EP 4 672 229 A1

Europäisches
Patentamt

European
Patent Office

Office européen
des brevets

# EUROPEAN SEARCH REPORT

**Application Number**

EP 24 18 5027

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 219 099 A (TENCENT TECH SHENZHEN CO LTD) 12 December 2023 (2023-12-12) | 1,13 | INV. G10L19/00 |
| Y | * Page 42, third paragraph - Page 49, sixth paragraph (translation); | 2-4,12, 15 | G10L25/30 |
| A | figure 7B * <br> * claims 1-20 * | 5 | ADD. G06N3/02 |
| | ----- | | |
| Y | WO 2023/064735 A1 (QUALCOMM INC [US]) 20 April 2023 (2023-04-20) <br><br> * paragraph [0047] - paragraph [0081]; figure 3 * <br> * claims 1,2,9 * | 2-4, 6-12,14, 15 | |
| | ----- | | |
| Y | US 2023/048402 A1 (SUNG JONGMO [KR] ET AL) 16 February 2023 (2023-02-16) <br><br> * paragraph [0047] - paragraph [0066]; figures 1,2 * <br> * paragraph [0071] - paragraph [0083] * <br> * paragraph [0131] - paragraph [0136] * <br> * claims 1,2,4,6,7 * | 2-4, 6-12,14, 15 | |
| | ----- | | TECHNICAL FIELDS SEARCHED (IPC) |
| A | US 2023/016637 A1 (SCHMIDT KONSTANTIN [DE] ET AL) 19 January 2023 (2023-01-19) * paragraph [0075] - paragraph [0101]; figure 1 * <br> * claims 1-14 * | 1-15 | G10L G06N |
| | ----- | | |

The present search report has been drawn up for all claims

| Place of search | Date of completion of the search | Examiner |
|---|---|---|
| Munich | 21 October 2024 | Virette, David |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 18 5027

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2024

| Patent document cited in search report | | Publication date | Patent family member(s) | | Publication date |
|---|---|---|---|---|---|
| CN 117219099 | A | 12-12-2023 | NONE | | |
| WO 2023064735 | A1 | 20-04-2023 | CN | 118077003 A | 24-05-2024 |
| | | | EP | 4416726 A1 | 21-08-2024 |
| | | | KR | 20240087809 A | 19-06-2024 |
| | | | TW | 202324382 A | 16-06-2023 |
| | | | WO | 2023064735 A1 | 20-04-2023 |
| US 2023048402 | A1 | 16-02-2023 | NONE | | |
| US 2023016637 | A1 | 19-01-2023 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AARON VAN DEN OORD** ; **ORIOL VINYALS** ; **KORAY KAVUKCUOGLU**. Neural Discrete Representation Learning. *arXiv 1711.00937*, 2018
- **Y. STYLIANOU**. Efficient Decomposition of Speech Signals Into a Deterministic and a Stochastic Part. *Fourth International Symposium on Signal Processing and Its Applications, Gold Coast, QLD, Australia*, 1996, 5-8
- **ZHENG, CHENGYU et al.** Interactive speech and noise modeling for speech enhancement.. *Proceedings of the AAAI Conference on Artificial Intelligence.*, 2021, vol. 35 (16)

- **XAVIER GLOROT** ; **ANTOINE BORDES** ; **YOSHUA BENGIO**. *Proceedings of the Fourteenth International Conference on Artificial Intelligence and Statistics, PMLR*, 2011, vol. 15, 315-323
- **OORD, AARON VAN DEN** ; **SANDER DIELEMAN** ; **HEIGA ZEN** ; **KAREN SIMONYAN** ; **ORIOL VINYALS** ; **ALEX GRAVES** ; **NAL KALCHBRENNER** ; **ANDREW SENIOR** ; **KORAY KAVUKCUOGLU**. Wavenet: A generative model for raw audio.. *arXiv: 1609.03499*, 2016